Europäisches Patentamt

European Patent Office

Office européen des brevets

(11) Publication number: **0 214 687**

**A2**

(12) **EUROPEAN PATENT APPLICATION**

(21) Application number: **86201477.6**

(22) Date of filing: **28.08.86**

(51) Int. Cl.⁴: **G01N 3/24**

(30) Priority: **06.09.85 IT 2207685**

(43) Date of publication of application:
**18.03.87 Bulletin 87/12**

(84) Designated Contracting States:
**BE DE FR GB IT LU NL**

(71) Applicant: **CISE- Centro Informazioni Studi**
**Esperienze S.p.A.**
**Via Carducci, 14**
**I-20123 Milano(IT)**
Applicant: **COMMUNAUTE EUROPEENNE DE**
**L'ENERGIE ATOMIQUE (EURATOM)**
**Bâtiment Jean Monnet Plateau du Kirchberg**
**Boîte Postale 1907**
**L-1019 Luxembourg(LU)**

(72) Inventor: **d'Agraves, Bertrand Causse**
**Via Caprera 10**
**I-21014 Laveno, Varese(IT)**
Inventor: **Martinella, Remo**
**Via A. Vespucci 2**
**I-20093 Cologno Monzese, Milan(IT)**

(74) Representative: **De Carli, Erberto et al**
**ING. BARZANO' & ZANARDO MILANO S.p.A.**
**Via Borgonuovo, 10**
**I-20121 Milano(IT)**

(54) Device for tribologic measurements.

㊗ In a device for tribologic measurements between a first revolving piece and a second piece insisting on the first one, wherein the friction force between the two pieces is detected by a dynamometer, provision is made for constraining the second component to the revolution axis of the first component, to avoid that tangential displacements of the two pieces relatively to each other, which could cause the contact areas to vary, may occur.

**Fig.1**

# DEVICE FOR TRIBOLOGIC MEASUREMENTS

The present invention relates to a device for tribological measurements, i.e., measurements of friction and wear.

Presently devices, denominated tribometers, exist, which allow measuring the friction forces resulting from the interaction between two solid pieces in mutual contact, either resting, or in relative motion the one relatively to the other, as well as the resistance to wear of the two solid pieces.

The two solid pieces can have such a shape and relative motion as to reproduce the actual conditions under which they operate.

For example, the two solid pieces can be parts of a machine, of a device, etc., which one wishes to submit to friction and wear tests, or samples of material, knowing the friction coefficient and the wear degree of which is desired.

A type of these devices is structured in such a way as to drag to rotate the one of the two pieces, hereunder denominated as "revolving piece", and to support the other piece, hereunder denominated as "insisting piece", against the revolving piece, so to keep the two in mutual contact along determined contact areas.

For example, the couple of contact pieces can be a slider-cylinder couple, wherein the slider is in contact with the cylindrical surface of the cylinder, or a pin-disc couple, wherein the pin is in contact with one of the two flat surfaces of the disc, in a position not coincident with the revolution axis of the disc.

In such devices, besides the rotational dragging of the revolving piece, a kinematic connection is provided of the insisting piece with an end of a dynamometer. The other end of dynamometer is rigidly connected to the stationary part of the device. The device is also provided with a guided weight which applies a load to the insisting piece, along a direction orthogonal to the surface of revolving piece.

When the revolving piece starts rotating, the insisting piece would follow it in its revolving motion, if it would not be kept stopped by the reaction of the dynamometer. As known, from the value of the reaction force of dynamometer calculating back is possible, by simple calculations, the value of the friction force arising from the interaction between the two pieces for that determined load.

These devices show however a drawback, which jeopardizes the correctness and precision of the measurement.

In fact, as known, the dynamometer gets deformed, during the test, proportionally to the friction force, so to allow it to measured; deformation of dynamometer causes a tangential displacement of the insisting piece relatively to the circular track of contact of the revolving piece, and hence a change occurs in contact areas of the two pieces.

This means, in other terms, that over time a change occurs in contact areas of the solid pieces, because friction can vary with time.

And this fact is certainly and clearly momentous. Let us think for example to two solid pieces which have been provided with a surface treatment, measuring the evolution with time of the friction force, or of the wear strength of which is desired: if the contact areas under measurement continue changing with time, it shall be evident that such areas are not submitted to a continuous tribologic stress, and hence the detected measurement values are not reliable.

Purpose of the present invention is finding a solution for such technical problem.

Such a purpose is achieved by providing a device for tribologic measurements between a first solid piece revolving around a revolution axis, and a second solid piece insisting on said first piece, onto at least one of said two pieces a load being applied to cause a contact reaction between the two pieces, the device comprising dynamometric means kinematically connected to the second piece to the purpose of detecting the friction force between the first piece and the second piece, the device being characterized in that it furthermore comprises constraint means constraining the second piece to rotate around the revolution axis of the first piece.

Thanks to this rotational constraint, the second piece can no longer carry out tangential movements, but it can only move circumferentially relatively to the revolution axis of the first piece, with the result that changes of the contact areas of the two pieces are prevented.

To understand the characteristics and advantages of the present invention, hereunder a description is reported of two exemplifying, not limitative forms of practical embodiment thereof, illustrated in the attached drawing table, wherein:

Fig. 1 is a schematic perspective top view of a first device according to the invention for applications to a pin-disc couple;

Fig. 2 is a schematic view of a second device according to the invention for applications to a slider-cylinder couple.

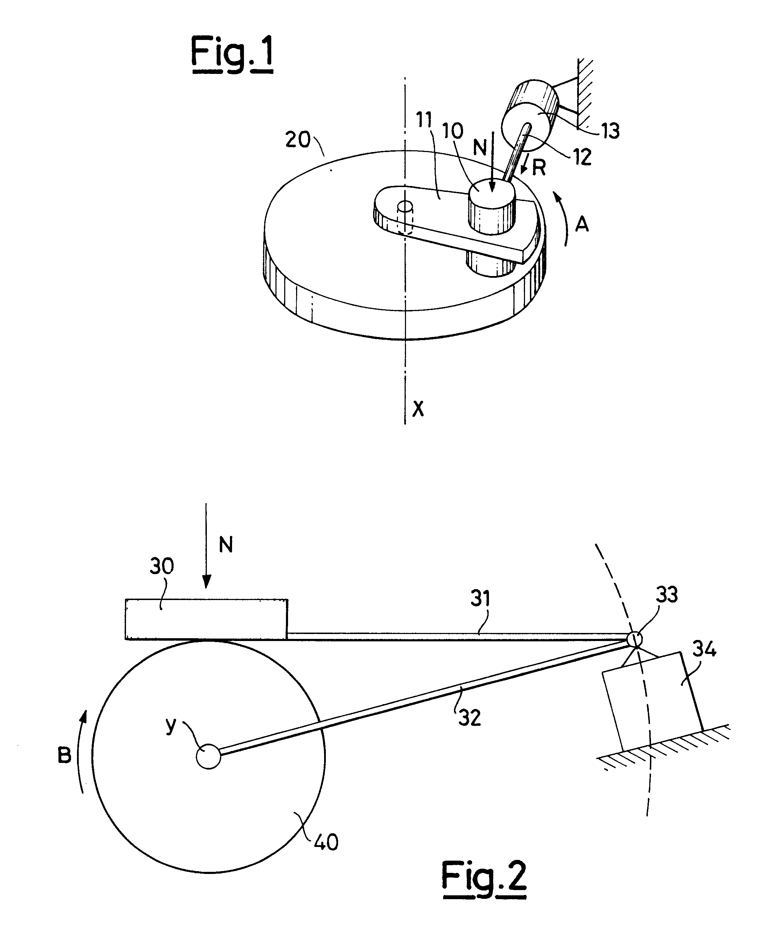

Referring to Fig. 1, the pin is indicated with 10 and the disc is indicated with 20.

The device is provided with means, herein neither described nor illustrated, which drive the disc 20 to revolve around an axis X, with the revolving direction being as indicated by the arrow A.

Pin 10 is mounted on a rigid element or arm 11 hinged at an end on the revolving axis X of disc 20. The mount of pin 10 on arm 11 is such that the pin results freely slidable through the arm along a direction parallel to axis X.

On pin 10 a weight N schematized by an arrow insists. As a matter of fact, weight N appplies a determined force or load on pin 10, so that an end of pin comes to press against one of the two flat faces of disc 20.

Pin 10 is kinematically connected through a rod 12 to an end of dynamometer 13. The other end of dynamometer 13 is constrained to the stationary part of the device.

The operating way of the device is simple. After the revolving of disc 20 being started up according to arrow A, pin 10 is prevented by the dynamometer 13, through rod 12, from rotating it too together with the disc, in known way. As it has already been explained in the introduction, from the value of reaction force R of dynamometer 13, calculating back is possible, by simple calculations, the value of the friction force arising from the interaction between pin and disc under the action of that determined weight N.

The rod 11 does not allow pin 10 to tangentially move relatively to the circular track of contact with disc 20, but it only allows it to carry out circumferential movements around the axis X along the same track. In this way, pin 10 moves always along the same circular contact area of the face of disc 20. Thus, the contact areas between disc and pin do not change with time, thus obviating the drawbacks of the prior art, as seen in the introduction.

In Fig. 2 shown is a second device for tribologic measurements on a slider-cylinder couple, wherein the slider is indicated with 30, and the cylinder with 40.

Also in this case means, neither described nor illustrated, are provided, which drive cylinder 40 to rotate around an axis Y, perpendicular to drawing plane, according to the rotation direction as indicated by arrow B. On slider 30, a weight or load N, schematically shown by an arrow, as for the first device, is applied. Weight N keeps a face of slider 30 in contact with the cylindrical surface of cylinder 40.

The device is provided with a couple of rigid elements or arms, schematized by two rods 31 and 32. Rod 31 is rigidly connected to an end of slider 30, and at its other end it is connected, through a hinge 33, to the body of a dynamometer 34. The other rod 32 is connected at an end to the same hinge 33, and at its other end, rod 32 is hinged on revolution axis Y.

After the revolving of cylinder 40 being started up according to arrow B, the slider 30 is prevented by dynamometer 34, through rod 31, from being dragged into rotation by the cylinder 40. As it has already been explained, through the dynamometer the value is learnt of friction force between slider 30 and cylinder 40 for that determined weight N.

It is evident that the constraint constituted by rod 32 does not allow tangential displacements to occur of slider 30 relatively to the circular track of contact of cylinder 40 (or tangential displacements relatively to the circle shown in figure, representing cylinder 40). Circumferential displacements along the same track around the revolution axis Y are possible, as indicated by the broken line. In this way, as slider 30 does not change its tangency points with the circular contact area of the cylindrical surface of cylinder 40, the contact areas of the cylinder and of the slider do not change with time, in this case too the drawbacks of the prior art, as seen in the introduction, being obviated.

It should be observed that hinge 33 allows displacements of slider 30 towards axis Y, due to the wear to occur, as well as the free action of weight N to take place.

In the two Examples, the driving means for disc 20 and cylinder 40 are not described, nor described are the loading means, to make a load N to lie heavy on pin 10 or on slider 30, because all such means are definitely within the reach of one skilled in the art.

It is clear that both the arm 11 and rods 31 and 32 can be replaced by many other kinematically equivalent means, which allow pin 10 and slider 30 to be rotatably constrained.

The shape of the contacting pieces described can vary. For example, the pin can have its contact tip with spherical shape, and not flat as shown in figure, the slider can also have a curved contact face matching the curvature of the cylindrical surface of cylinder and not flat as in figure, and so forth.

**Claims**

1. Device for tribologic measurements between a first solid piece revolving around a revolution axis, and a second solid piece insisting on said first piece, onto at least one of said two pieces a load being applied to cause a contact reaction between the two pieces, the device comprising dynamometric means kinematically connected to the second piece to the purpose of detecting the friction force between the first piece and the second piece, the device being characterized in that it furthermore comprises constraint means constraining the second piece to rotate around the revolution axis of the first piece.

2. Device according to claim 1, wherein said constraint means comprise a rigid element bearing the second piece and hinged onto the revolution axis of the first piece.

3. Device according to claim 1, wherein said constraint means comprise a couple of rigid elements hinged to each other in a common point, to which point also an end of said dynamometric means is fastened, the one of said couple of rigid elements bearing said second piece, and the other of said couple of rigid elements being also hinged onto the revolution axis of the first piece.

## Fig.1

## Fig.2